# EUROPÄISCHE PATENTSCHRIFT

(11) **EP 1 862 663 B1**
(45) Veröffentlichungstag und Bekanntmachung des Hinweises auf die Patenterteilung: **27.01.2010**
(21) Anmeldenummer: 07108877.7
(22) Anmeldetag: 24.05.2007
(51) Int. Cl.: F02M 35/12, F01N 1/10

(54) **Integrierter Luftmassenmesser und Breitbanddämpfer**
Integrated air mass meter and broadband attenuator
Mesureur de masse d'air intégré et amortisseur à large bande

(30) Priorität: 30.05.2006 US 809019 P
(43) Veröffentlichungstag der Anmeldung: 05.12.2007
(73) Patentinhaber: MANN+HUMMEL GmbH, 71638 Ludwigsburg (DE)
(72) Erfinder: Miller, Stuart, Kalamazoo, MI 49009 (US)

(56) Entgegenhaltungen:
- DE-A1- 19 638 304
- DE-A1- 19 703 414
- DE-A1- 19 748 853
- DE-C1- 19 960 427
- US-A- 5 325 712
- US-A- 5 548 093
- US-A1- 2003 066 706
- US-A1- 2005 284 692

## Beschreibung

### Technisches Gebiet

Die Erfindung betrifft eine Baugruppe, die einen integrierten Luftmassenmesser und einen Breitbanddämpfer beinhaltet, und die so ausgelegt ist, dass sie in einem Luftzufuhrsystem eines Verbrennungsmotors verwendet werden kann.

### Stand der Technik

In vielen Verbrennungsmotoren wird ein Luftmassenmesser verwendet, um den in den Motor eintretenden Luftdurchsatz zu messen und um im Gegenzug ein Ausgangssignal zu liefern, das dazu verwendet wird, um ein gewünschtes Kraftstoff-Luft-Gemisch aufrecht zu erhalten. Das Aufrechterhalten eines gewünschten Kraftstoff-Luft-Gemisches ist wichtig, um ein Optimum an Motorleistung, Kraftstoffersparnis und eine Verringerung der Motoremissionen zu erzielen.

Weil das Ausgangssignal, und insbesondere das Signal-Rausch-Verhältnis eines üblichen Luftmassenmessers, durch Luftturbulenzen negativ beeinflusst werden können, messen Luftmassenmesser vorzugsweise Luftströme, die eine gleichmäßige Geschwindigkeit und minimale Turbulenzen über die vollständige Bandbreite der Betriebszustände des Motors aufweisen.

Die Auswirkungen von Luftturbulenzen auf einen Luftmassenmesser können vor allem dann Probleme bereiten, wenn der Luftdurchsatz zum Beispiel im Leerlauf des Motors niedrig ist. Darüber hinaus können Turbulenzen bei einem niedrigen Luftdurchsatz und die begleitenden negativen Einflüsse auf den Luftmassenmesser sich verschlechtern, wenn der Luftmassenmesser in einem Strömungsweg mit relativ großem Durchmesser angeordnet ist.

Viele Hochleistungsverbrennungsmotoren wie solche mit Turbolader oder Aufladegebläse benötigen hohe Ansaugluftdurchsätze. Diese hohen Luftdurchsätze werden normalerweise erreicht, indem im Luftansaugsystem Strömungswege mit relativ großem Durchmesser vorgesehen sind. Zusätzlich zu den Anforderungen hoher Ansaugluftdurchsätze geben derartige Hochleistungsmotoren vorzugsweise eine akustische Signatur von sich, welche durch den Einbau eines Akustikgerätes wie zum Beispiel eines einstellbaren (z. B. Breitband-)Dämpfers in das Luftansaugsystem, erzielt werden kann.

Der verfügbare Platz für Bauteile wie Luftmassenmesser und Breitbanddämpfer ist üblicherweise wegen des Designs und ästhetischer Erwägungen eingeschränkt. Außerdem bereiten die von vielen Hochleistungsmotoren geforderten hohen Luftdurchsätze Probleme mit den Anforderungen an geringe Turbulenzen für Luftmassenmesser, die in derartige Motoren eingebaut sind.

Aus der US 5,548,093 ist ein geräuscharmer Schlauch bekannt geworden, umfassend: ein hohles, zylindrisches Schalldämmungselement aus einem Weichschaummaterial, ein Netz aus Kunstharz und/oder einen spiralförmigen Draht darin, sowie ein Schalldämmungsrohr, das aus einem Weichgummi besteht, als Faltenbalg ausgebildet ist und das Schalldämmungselement umgibt.

Die DE 197 03 414 A1 beschreibt einen Geräuschdämpfer für die hinter einem Lader liegende Ansaugdruckleitung für speziell größere Dieselmotoren, der auch bei Überdrücken im Bereich von 2 bis 5 bar das Laderpfeifen im Frequenzbereich von 8 bis 20 kHz lückenlos breitbandig mit hohem Wirkungsgrad ausdämpft. Dies wird durch einen abgestimmten kombinierten Einsatz einer Vielzahl von lambda/4-Resonanzdämpfer-Mikrokammern in Verbindung mit Reflektorblenden im Geräuschdämpfer-Rohrabschnitt ermöglicht.

Die US 2003/0066706 A1 beschreibt ein Strömungsrohr für ein Ansaugsystem mit einem Turbolader, das einen longitudinalen Strömungspfad und eine Geräuschdämpfungsplatte aufweist, die in dem Strömungspfad angeordnet ist. Eine Mehrzahl von Rippen sind an einer Innenseite des Rohrs angeordnet. Die Rippen sind zueinander versetzt angeordnet und auf eine gewünschte Frequenz abgestimmt. Die Geräuschdämpfungsplatte weist eine Mehrzahl von Löchern mit variirendem Durchmesser und Tiefe auf. Die Geräuschdämpfungsplatte wirkt zusammen mit den Rippen als ein Tiefpassfilter, der hohe Frequenzen dämpft, während er tiefe Frequenzen hindurchlässt.

Die DE 197 48 853 A1 beschreibt einen wärmeempfindlichen Luftmassensensor mit einem Meßrohr, welches in dem Einlassrohr einer Brennkraftmaschine mit innerer Verbrennung angeordnet ist, ein Luftflussmassenmesselement, welches in dem Messrohr angeordnet ist, um die fließende Masse an Ansaugluft festzustellen, die in dem Einlassrohr fließt, unter Nutzung der Tatsache, dass die Größe eines Wärmeverlustes der fließenden Masse an Ansaugluft entspricht, sowie ein Vergleichmäßigungsteil, welches am Außenumfang des Messrohrs entlang dessen Axialrichtung vorgesehen ist, um die in dem Messrohr fließende Ansaugluft dadurch zu vergleichmäßigen, dass die in dem Einlassrohr fleißende Ansaugluft vergleichmäßigt wird.

Die Aufgabe der Erfindung besteht darin, einen Breitbanddämpfer und einen Luftmassenmesser zur Verfügung zu stellen, die sowohl mit dem Luftdurchsatz als auch mit den Platzbedürfnissen vieler Hochleistungsmotoren kompatibel sind.

Es ist ferner die Aufgabe der Erfindung, ein Gerät zur Verfügung zu stellen, das einen Luftmassenmesser integriert mit einem Breitbanddämpfer beinhaltet, und das für die Verwendung in einem Luftzufuhrsystem eines Verbrennungsmotors ausgelegt ist.

Ein anderes Ziel der Erfindung ist es, ein Luftzufuhrsystem zur Verfügung zu stellen, das dazu ausgelegt ist, einen kontinuierlichen und gleichmäßigen Luftstrom einem Luftmassenmesser unter vollen Betriebsbedingungen des Motors zuzuführen, während der Luftstrom zum Motor minimal eingeschränkt wird

Ein weiteres Ziel der Erfindung ist es, ein Luftzufuhrsystem zur Verfügung zu stellen, das so ausgelegt ist, dass es kontrolliert akustische Emissionen reduziert.

Ziel der Erfindung ist es ebenso, eine Baugruppe zur Verfügung zu stellen, die einen integrierten Luftmassenmesser und einen Breitbanddämpfer in kompaktem Design beinhaltet.

### Offenbarung der Erfindung

Diese und weitere Ziele werden gemäß der vorliegenden Erfindung erreicht, indem ein Luftzufuhrsystem zur Verfügung gestellt wird, das dazu ausgelegt ist, in ein Luftansaugystem eines Verbrennungsmotors eingebaut zu werden. Das Luftzufuhrsystem beinhaltet ein Gehäuse, ein im Wesentlichen zylindrisches, im Gehäuse eingepasstes Formteil, eine über eine äußere Oberfläche des Formteils gelegte Schicht Drahtgeflecht, eine über eine äußere Oberfläche des Drahtgeflechtes gelegte Schicht Akustikschaum und einen im Inneren des Formteils eingebrachten Luftmassenmesser.

Das Formteil, das ein vorgelagertes Segment und ein nachgelagertes Segment hat, beinhaltet eine erste Wand, die sich entlang einer Längsachse des Formteils erstreckt, wobei die erste Wand eine Vielzahl an Perforationen im vorgelagerten Segment beinhaltet, eine zweite innerhalb des nachgelagerten Segments geformte Wand orthogonal zur ersten Wand und mit einer Längsachse des Formteils fluchtend, eine Vielzahl an Ringen, die in dem nachgelagerten Segment geformt sind, wobei jeder Ring konzentrisch mit einer Längsachse des Formteils fluchtet und eine zentrale kreisförmige Öffnung hat, und ein Strömungsrohr des Luftmassenmessers, das in dem vorgelagerten Segment geformt ist und mit einer Längsachse des Formteils fluchtet. Das Strömungsrohr des Luftmassenmessers teilt die erste Wand gabelförmig innerhalb des vorgelagerten Segments.

Gemäß einer Ausführungsform sind die Perforationen groß ausgelegt und beabstandet, um so die Intensität von niederfrequenten Vibrationen zu reduzieren, die von dem vorgelagerten Segment ausgehen. Gemäß einer weiteren Ausführungsform ist die Vielzahl der Ringe groß ausgelegt und beabstandet, um so die Intensität von hochfrequenten Vibrationen zu reduzieren, die von dem nachgelagerten Segment ausgehen. Vorzugsweise ist der Luftmassenmesser innerhalb des Strömungsrohrs des Luftmassenmessers angeordnet.

Gemäß einer weiteren Ausführungsform beinhaltet ein Verfahren zum Gestalten eines Luftzufuhrsystems (i) die Gestaltung eines im Wesentlichen zylindrischen Formteils, das ein vorgelagertes Segment und ein nachgelagertes Segment hat, (ii) das Umwickeln einer Schicht Drahtgeflecht über eine umlaufende äußere Oberfläche des Formteils, (iii) das Umwickeln einer Schicht Akustikschaum über eine äußere Oberfläche des Drahtgeflechtes, um ein vormontiertes Bauteil zu bilden, (iv) das Einführen des vormontierten Bauteils in ein Gehäuse und (v) das Einführen eines Luftmassenmessers in den Innenraum des Formteils, um so die Baugruppe zu bilden.

### Kurze Beschreibung der Zeichnungen

Die Erfindung wird im Folgenden detaillierter mit Bezug zu erklärenden bevorzugten Ausführungsformen beschrieben, die in den begleitenden Zeichnungen gezeigt werden. Es zeigt:
Fig. 1 eine integrierte Luftmassenmesser-/Breitbanddämpferbaugruppe gemäß einer ersten Ausführungsform der Erfindung,
Figur 2 eine integrierte Luftmassenmesser-/Breitbanddämpferbaugruppe gemäß einer zweiten Ausführungsform der Erfindung, und
Figur 3 eine perspektivische Ansicht eines vormontierten Bauteils.

### Ausführungsformen der Erfindung

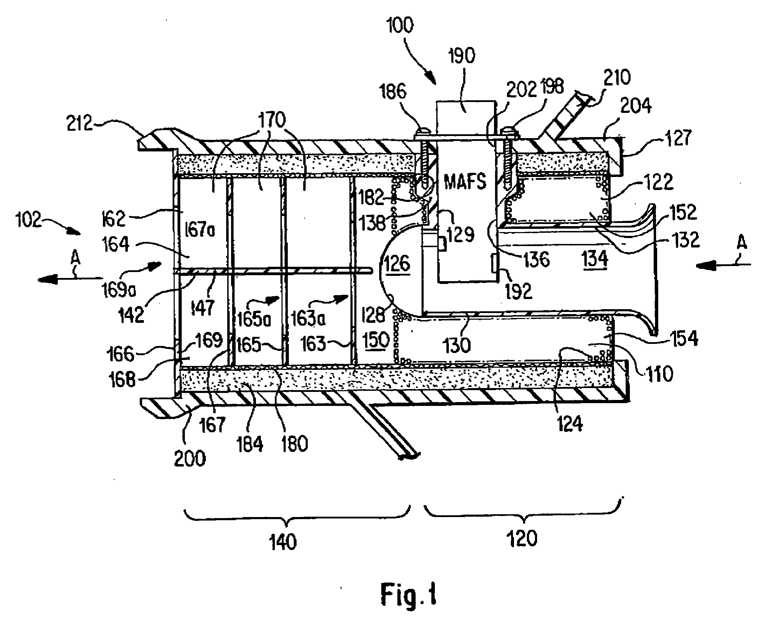

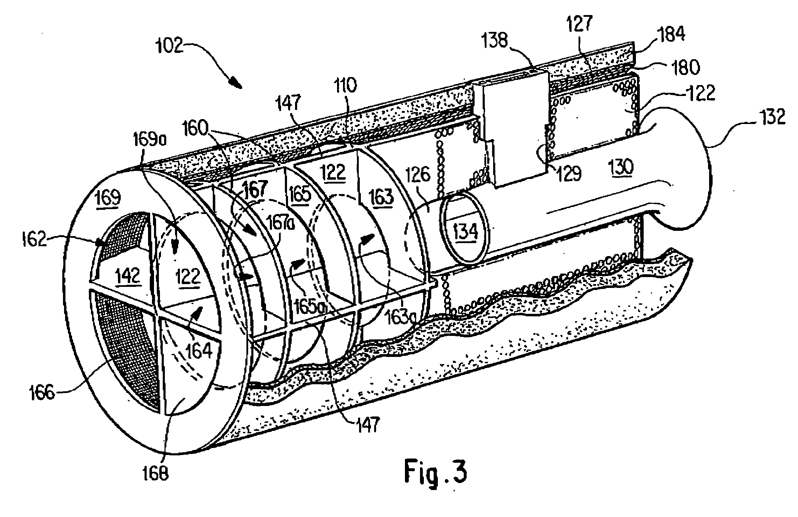

Figur 1 zeigt eine Querschnittszeichnung einer integrierten Luftmassenmesser-/Breitbanddämpferbaugruppe gemäß einer ersten Ausführungsform. Die Baugruppe 100 beinhaltet ein vormontiertes Bauteil 102, das ein Formteil 110, eine Schicht Drahtgeflecht 180 und eine Schicht Akustikschaum 184 beinhaltet. Das Drahtgeflecht und der Akustikschaum sind über eine äußere umlaufende Peripherie des Formteils gewickelt und begrenzen ein vormontiertes Bauteil, das eine im Wesentlichen zylindrische Form hat. Eine perspektivische Ansicht des vormontierten Bauteils 102 wird in Figur 3 gezeigt.

Das Formteil, das vorzugsweise eine Einheit bildet, beinhaltet eine Vielzahl an Wänden, ein Strömungsrohr 130 des Luftmassenmessers und ein optionales Paar Verbindungsmittel zum Befestigen der Teile 138. Das Formteil ist in ein vorgelagertes Segment 120 und in ein nachgelagertes Segment 140 geteilt. In einer Ausführungsform ist die Länge des vorgelagerten Segments 120 vorzugsweise ungefähr gleich mit der Länge des nachgelagerten Segments 140.

Das Drahtgeflecht, welches die Schicht Akustikschaum abstützt, wird durch äußere radiale Kanten des Formteils gestützt, wie dies weiter unten beschrieben ist. Wenn Luft durch die Baugruppe strömt, werden die Schallwellen durch die äußere Schicht Akustikschaum gedämpft. Das darüber gewickelte Drahtgeflecht und der Akustikschaum begrenzen einen Innenraum 150 der Baugruppe.

Im montierten Zustand wird das vormontierte Bauteil in ein Gehäuse 200 eingeführt. Gemäß einer Ausführungsform kann das Gehäuse einen Auslass 204 in einem Luftzufuhrsystem beinhalten. Zum Beispiel kann der Auslass 204 in einer Wand 210 einer Luftkastenabdeckung ausgebildet sein. Mit dem in das Gehäuse eingeführten vormontierten Bauteil kann durch das Einführen eines Luftmassenmessers 190 in den Innenraum 150 durch in dem Gehäuse 200, im Akustikschaum 184, im Drahtgeflecht 180 und in einem Strömungsrohr des Luftmassenmessers ausgebildete Öffnungen eine komplette Baugruppe 100 ausgebildet werden. In der zusammengebauten Konfiguration ist ein Messfühler 192 des Luftmassenmessers 190 in dem Strömungsrohr 130 des Luftmassenmessers angeordnet. Vorzugsweise fluchtet der Messfühler 192 konzentrisch mit dem Strömungsrohr.

Die in dem Formteil geformte Vielzahl an Wänden unterteilt den Innenraum 150 in eine Vielzahl an Strömungskammern. Die Strömungskammern sind so ausgelegt, dass sie einen Schallminderungseffekt (z. B. Geräuschdämpfung) über eine große Bandbreite an Frequenzen haben. Die Strömungskammern sind weiterhin so ausgelegt, dass sie den Luftmassenmesser 190 mit einem gleichmäßigen Luftstrom versorgen, während sie den Luftstrom durch die Baugruppe zu einem nachgelagerten Verbrennungsmotor minimal verringern. Wie in Figur 1 gezeigt, strömt die Luft durch die in Betrieb befindliche Baugruppe in die durch die Pfeile A aufgezeigte Richtung.

Eine erste Wand 122, die entlang eines Durchmessers des axialen Querschnitts des vormontierten Bauteils ausgebildet ist, unterteilt das vorgelagerte Segment des Innenraumes 150 in zwei axiale Hauptkammern 152, 154. Die erste Wand 122 verläuft über die gesamte Länge der Baugruppe, während die beiden Hauptkammern über die Länge des vorgelagerten Segments 120 verlaufen. Durch den Innenraum der Baugruppe strömende Ansaugluft - und damit auch Schallwellen - strömen durch diese beiden Hauptkammern.

In dem vorgelagerten Segment ist eine Vielzahl an Perforationen 124 in der ersten Wand 122 ausgebildet. Gemäß einer Ausführungsform kann die Größe der Perforationen zwischen ca. 0,1 und 2 mm betragen. Die Größe und der Abstand der Perforationen werden vorzugsweise so gewählt, dass die Intensität niederfrequenter Vibrationen reduziert wird (z. B. 200 bis 1500 Hz-Vibrationen), die durch die durch das vorgelagerte Segment der Baugruppe strömende Luft verursacht werden.

Ohne sich auf eine Theorie festlegen zu wollen, Schallwellen, die sich in jeder entsprechenden Hauptkammer im vorgelagerten Segment fortpflanzen, können die erste perforierte Wand durchdringen und mit den sich in der benachbarten Hauptkammer fortpflanzenden Schallwellen wechselwirken. Diese Wechselwirkungen können vorteilhafterweise einen Auslöschungseffekt zur Folge haben, der die gesamte Intensität von niederfrequenten Vibrationen reduziert.

Das Strömungsrohr 130 des Luftmassenmessers, das ebenfalls in dem vorgelagerten Segment 120 des Formteils ausgebildet ist, teilt die erste Wand gabelförmig so, dass eine äußere Oberfläche der Strömungsrohrwand eine innere Oberfläche in jeder entsprechenden Hauptkammer begrenzt. Das Strömungsrohr fluchtet mit einer Mittelachse der Baugruppe und begrenzt eine im Wesentlichen zylindrische Strömungskammer 134 des Luftmassenmessers. Das Strömungsrohr beinhaltet eine massive (nicht perforierte) Wand und hat eine Schalltrichteröffnung 132 an einem vorgelagerten Ende.

Gemäß einer Ausführungsform kann das Strömungsrohr 130 des Luftmassenmessers einen Innendurchmesser von ca. 25 bis 45 mm, vorzugsweise ca. 35 mm haben, und der Durchmesser der Schalltrichteröffnung kann 40 bis 60 mm und vorzugsweise 50 mm betragen. Die Länge des Strömungsrohrs kann ca. 75 bis 100 mm betragen.

Eine bevorzugte Baugruppe hat eine Gesamtlänge von ca. 200 bis 250 mm und einen Außendurchmesser von ca. 100 bis 150 mm. Somit beträgt die Länge des Strömungsrohrs vorzugsweise 50 % oder weniger der Gesamtlänge der Baugruppe, und der Querschnittsbereich des Strömungsrohrs beträgt vorzugsweise 50 % oder weniger, oder noch besser 25 % oder weniger, des Querschnittsbereiches des Innenraumes.

Das Formteil beinhaltet ebenfalls einen Ausschnitt 126, der in der ersten Wand 122 an einem nachgelagerten Ende des Strömungsrohrs 130 ausgebildet ist. Der Ausschnitt 126 kann die Einschränkung der aus dem Strömungsrohr strömenden Luft verringern. Wegen des Ausschnittes wird ein Querschnittsrand 128 der ersten Wand 122 um eine endliche Distanz von der Radialebene des nachgelagerten Endes des Strömungsrohrs 130 versetzt und behindert nicht sofort die Luft, wenn diese aus dem Strömungsrohr strömt. In einer Ausführungsform ist der Ausschnitt 126 halbkreisförmig gestaltet.

Ein in die Baugruppe eintretender Luftstrom durchströmt das vorgelagerte Segment 120 über entweder eine der beiden axialen Hauptkammern 152, 154 oder über das Strömungsrohr 130. Weil das Strömungsrohr 130 konzentrisch mit einer Längsachse der Baugruppe fluchtet, ist der Luftstrom durch das Strömungsrohr vorzugsweise weniger verwirbelt und hat eine gleichmäßigere Geschwindigkeit als der gesamte Luftstrom durch den Innenraum. Durch das Anordnen des Messteils 192 des Luftmassenmessers 190 innerhalb des Strömungsrohrs misst der Luftmassenmesser folglich nur einen Teil der durch den Innenraum strömenden Luft. Der von dem Sensor gemessene Teil des Luftstroms hat eine relativ gleichmäßige Geschwindigkeit und relativ geringe Turbulenzen.

Wie oben erwähnt, um den Luftmassenmesser 190 in die Strömungskammer 134 des Luftmassenmessers einzuführen, wird eine Öffnung 136 in einer Wand des Strömungsrohrs 130 angebracht. In der ersten Hauptwand 122 wird eine Nut 129 ausgebildet, um so mit der Öffnung 136 zu fluchten. In gleicher Weise sind jeweils Öffnungen 182, 186, 202 in dem darüber gewickelten Drahtgeflecht 180, in dem Akustikschaum 184 und in dem Gehäuse 200 ausgebildet, die mit der Nut 129 und der Öffnung 136 fluchten, um so eine problemlose Einführung des Luftmassenmessers 190 zu ermöglichen.

Optional beinhaltet das Formteil weiterhin ein Paar Verbindungsmittel zum Befestigen der Teile 138. Einmal eingeführt, kann der Luftmassenmesser 190 an der Baugruppe durch die Verwendung von Verbindungsmitteln 198 wie Blechschrauben befestigt werden. Derartige Verbindungsmittel können ebenfalls verwendet werden, um das vormontierte Bauteil am Gehäuse zu befestigen.

Durch das vorgelagerte Segment strömende Luft strömt in das nachgelagerte Segment. Wie oben erwähnt, verläuft die erste Wand 122 von dem vorgelagerten Segment 120 in das nachgelagerte Segment 140. In dem nachgelagerten Segment besteht die erste Wand 122 aus einer massiven (nicht perforierten) Wand. Eine zweite Wand 142 ist orthogonal zur ersten Wand 122 ausgebildet und fluchtet axial mit dem Innenraum 150. Somit ist in dem nachgelagerten Segment der Baugruppe der Innenraum 150 in insgesamt vier axiale Kammern 162, 164, 166, 168 unterteilt. Die die Baugruppe verlassende Luft strömt zuerst durch das nachgelagerte Segment über eine der vier axialen Kammern.

Die axialen Kammern des nachgelagerten Segments sind unterteilt, um so die Intensität hochfrequenter Vibrationen (z. B. 1.500 bis 15.000 Hz Vibrationen), die von der Baugruppe ausgehen, zu reduzieren. Die Teilbereiche in den Kammern werden mittels einer Vielzahl an Ringen 163-169 gebildet, die orthogonal zur ersten und zur zweiten Wand 122, 142 angeordnet sind und die konzentrisch mit einer Mittel(Längs)achse der Baugruppe fluchten. Jeder dieser Ringe 163-169 beinhaltet eine massive (nicht perforierte) Wand an deren Außenumfang. Zusammen mit der ersten und zweiten Wand unterteilen die Ringe weiterhin die nachgelagerten axialen Kammern in eine Vielzahl von sequenziellen und akustisch abgestimmten Kammern 170. Die in Figur 1 gezeigten vier Ringe teilen die vier nachgelagerten axialen Kammern in insgesamt zwölf akustisch aufeinander abgestimmte Kammern. Gemäß einer Ausführungsform kann die Baugruppe 3 bis 6 Ringe beinhalten

Jeder Ring beinhaltet eine zentrale, kreisförmige Öffnung 163a, 165a, 167a, 169a. Die Öffnungen erlauben das Durchströmen der Luft durch die aufeinander abgestimmten Kammern. Gemäß einer bevorzugten Ausführungsform vergrößert sich der Durchmesser jeder aufeinanderfolgenden, kreisförmigen Öffnung in die nachgelagerte Richtung. Weiterhin verringert sich der axiale Abstand vorzugsweise zwischen jedem aufeinanderfolgenden Ring in die nachgelagerte Richtung.

Die axiale Beabstandung der Ringe und der Durchmesser der kreisförmigen Öffnungen haben einen Einfluss auf eine bestimmte Dezibelverringerung bei einer gegebenen Frequenz. Wenn zum Beispiel die Ringe näher zueinander versetzt werden, kann die gleiche Dezibelverringerung bei einer höheren Frequenz erreicht werden. Durch die Wahl der Beabstandung zwischen den Ringen und der Größe der kreisförmigen Öffnungen kann das nachgelagerte Segment so abgestimmt werden, dass die Intensität von niederfrequenten Vibrationen, die von der Baugruppe ausgehen, verringert wird.

Ohne sich auf eine Theorie festlegen zu wollen, Schallwellen, die sich durch eine akustisch abgestimmte Kammer fortpflanzen, können mit den sich in den benachbarten akustisch abgestimmten Kammern fortpflanzenden Schallwellen wechselwirken. Diese Wechselwirkungen können vorteilhafterweise einen Auslöschungseffekt zur Folge haben, der die gesamte Intensität von hochfrequenten Vibrationen reduziert.

Gemäß einer alternativen Ausführungsform kann das nachgelagerte Segment zwei separate und parallel verlaufende Wände beinhalten, die jede orthogonal zu der ersten Wand 122 ausgebildet sind. Bei einer solchen Konfiguration würde ein nachgelagertes Segment mit vier Ringen in achtzehn abgestimmte Kammern unterteilt sein. Durch die Erhöhung der Anzahl der abgestimmten Kammern (z. B. von 12 auf 18) verringert sich der axiale Querschnittsbereich jeder abgestimmten Kammer, was eine größere Schallschwächung bei höheren Frequenzen zur Folge hat.

In dem nachgelagerten Segment 140 stützt eine äußere umlaufende Kante jedes Ringes das aufliegende Drahtgeflecht 180. Das Drahtgeflecht wird auch in dem nachgelagerten Segment durch nach außen zeigende Kanten 127, 147 der ersten und zweiten Wand 122, 142 gestützt. In dem vorgelagerten Segment ist das Drahtgeflecht 180 durch nach außen zeigende Kanten 127 der ersten Wand 122 gestützt. Das Drahtgeflecht verhindert, dass der aufliegende Akustikschaum 184 deformiert und durch Unterdruck, der innerhalb des Innenraumes während des Motorbetriebs entstehen kann, in die axialen Kammern gezogen wird.

Gemäß einer Ausführungsform hat das Drahtgeflecht eine Dicke geringer als ca. 0,3 mm und der Akustikschaum hat eine Dicke von ca. 5 bis 20 mm, vorzugsweise ca. 10 mm. Die Dicke der ersten Wand, der zweiten Wand, des Strömungsrohrs und jedes Ringes 163-169 kann ca. 1,5 bis 3 mm betragen, vorzugsweise ca. 2 mm.

Bevorzugtes Drahtgeflecht wird aus Edelstahl hergestellt und hat eine Maschenweite von ca. 3 mm x 3 mm, obwohl auch andere Materialen und Maschenweiten verwendet werden können. Bevorzugter Akustikschaum kann aus einem beliebigen porösen, offenzelligen Kunstharzmaterial, wie zum Beispiel Material hergeleitet aus Ethylen-Propylen-Elastomer (EPDM), bestehen. Das Formteil 110 kann durch Spritzguss aus Materialien wie Polypropylen geformt werden.

Die Baugruppe wird vorzugsweise in das Luftzufuhrsystem eines Verbrennungsmotors eingebaut. Speziell ist die Baugruppe so ausgelegt, dass sie (z. B. auf der Reinluftseite) einem Luftfilter nachgelagert und der Drosselklappe eines Motors vorgelagert eingebaut werden kann. Gemäß einer ersten oben beschriebenen Ausführungsform mit Bezug auf Figur 1 kann das vormontierte Bauteil in ein Gehäuse eingeführt werden, das einen Auslass zu einem Filtereinsatz bildet. Bei einer derartigen Konfiguration beinhaltet das Gehäuse vorzugsweise einen umlaufenden, erhöhten Wulst 212 an dem nachgelagerten Ende. Ein solcher Wulst kann dazu verwendet werden, einen flexiblen Schlauch wie z. B. einen Gummischlauch über dem nachgelagerten Ende des Gehäuses, üblicherweise zusammen mit einer Schlauchschelle, zu befestigen. Der nachgelagerte Schlauch kann mit einem Eingang einer Drosselklappe verbunden werden.

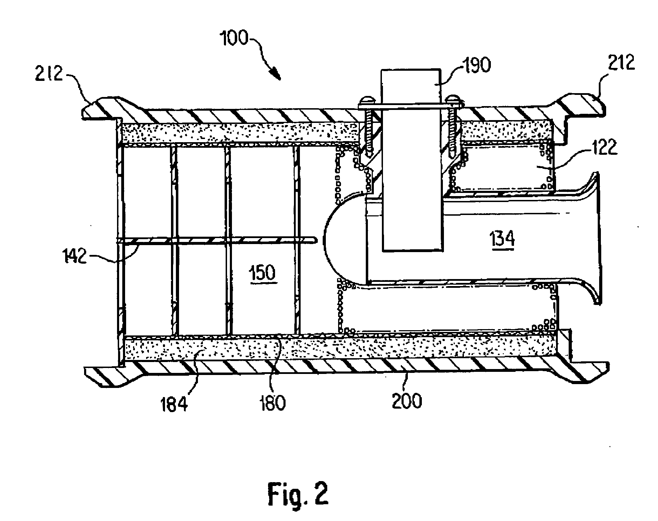

Gemäß einer alternativen Ausführungsform, die in Figur 2 gezeigt ist, kann die Baugruppe in ein freistehendes Gehäuse eingeführt werden, welches wiederum an ein Luftzufuhrsystem angebunden werden kann. Ein derartiges freistehendes Gehäuse beinhaltet vorzugsweise umlaufende, erhöhte Wülste sowohl an einem nachgelagerten Ende als auch an einem vorgelagerten Ende. Wie in der Ausführungsform von Figur 1 kann somit das nachgelagerte Ende des freistehenden Gehäuses mit dem nachgelagerten Bauelement in einem Luftzufuhrsystem verbunden werden, wie z. B. einem Eingangskanal zu einer Drosselklappe. Das vorgelagerte Ende des freistehenden Gehäuses kann mit einem vorgelagerten Bauelement in einem Luftzufuhrsystem verbunden werden, wie z. B. einem Ausgangskanal eines Luftfilters. Die nachgelagerte Verbindung und die vorgelagerte Verbindung können aus einem flexiblen (z. B. Gummi) Schlauch und einer Schlauchschelle realisiert werden.

Die vorangehende Beschreibung und die Beispiele wurden lediglich dargelegt, um die Erfindung zu erläutern und sind nicht vorgesehen, einschränkend zu sein.

## Patentansprüche

1. Luftzufuhrsystem (100), geeignet, in ein Luftansaugsystem eines Verbrennungsmotors eingebaut zu werden, wobei das Luftzufuhrsystem (100) durch folgende Merkmale **gekennzeichnet** ist:
ein Gehäuse (200);
ein im Wesentlichen zylindrisches, in das Gehäuse (200) eingefügtes Formteil (110), wobei das Formteil (110) ein vorgelagertes Segment (120) und ein nachgelagertes Segment (140) hat,
eine Lage Drahtgeflecht (180), das über eine umlaufende äußere Oberfläche des Formteils (110) geformt ist;
eine Schicht Akustikschaum (184), der über eine äußere Oberfläche des Drahtgeflechts (180) geformt ist; und
einen Luftmassenmesser (190), der in einen Innenraum des Formteils (110) eingeführt ist, wobei das Formteil (110) beinhaltet:
eine erste Wand (122), die sich entlang einer Längsachse des Formteils (110) erstreckt, wobei die erste Wand (122) eine Vielzahl an Perforationen (124) innerhalb des vorgelagerten Segments (120) beinhaltet;
mindestens eine zweite Wand (142), die innerhalb des nachgelagerten Segments (140) orthogonal zur ersten Wand (122) angeordnet ist und mit einer Längsachse des Formteils (110) fluchtet;
eine Vielzahl an Ringen (163, 165, 167, 169), die innerhalb des nachgelagerten Segments (140) angeordnet sind, wobei jeder Ring (163, 165, 167, 169) mit einer Längsachse des Formteils (110) fluchtet und eine zentrale, kreisförmige Öffnung (163a, 165a, 167a, 169a) hat; und
ein Strömungsrohr (130) des Luftmassenmessers (190), das innerhalb des vorgelagerten Segments (120) angeordnet ist und mit einer Längsachse des Formteils (110) fluchtet, wobei das Strömungsrohr (130) des Luftmassenmessers (190) die erste Wand (122) innerhalb des vorgelagerten Segments (120) gabelförmig teilt.

2. Luftzufuhrsystem nach Anspruch 1, **dadurch gekennzeichnet, dass** die erste Wand (122), die zweite Wand (142), das Strömungsrohr (130) des Luftmassenmessers (190) und die Vielzahl an Ringen (163, 165, 167, 169) eine Dicke von ca. 1,5 bis 3 mm haben.

3. Luftzufuhrsystem nach Anspruch 1, **dadurch gekennzeichnet, dass** das Drahtgeflecht (180) eine Dicke von weniger als ca. 0,3 mm hat.

4. Luftzufuhrsystem nach Anspruch 1, **dadurch gekennzeichnet, dass** der Akustikschaum (184) Ethylen-Propylen-Elastomer beinhaltet.

5. Luftzufuhrsystem nach Anspruch 1, **dadurch gekennzeichnet, dass** der Akustikschaum (184) eine Dicke von ca. 5 bis 20 mm hat.

6. Luftzufuhrsystem nach Anspruch 1, **dadurch gekennzeichnet, dass** das Formteil (110) ein Paar Verbindungsmittel (198) zum Befestigen vonTeilen beinhaltet.

7. Luftzufuhrsystem nach Anspruch 1, **dadurch gekennzeichnet, dass** das Gehäuse (200) einen Auslasskanal eines Filtereinsatzes beinhaltet.

8. Luftzufuhrsystem nach Anspruch 7, **dadurch gekennzeichnet, dass** das Gehäuse (200) einen umlaufenden, erhöhten Wulst an dessen nachgelagertem Ende beinhaltet.

9. Luftzufuhrsystem nach Anspruch 7, **dadurch gekennzeichnet, dass** das Gehäuse (200) umlaufende, erhöhte Wülste an dessen nachgelagertem Ende und vorgelagertem Ende beinhaltet.

10. Luftzufuhrsystem nach Anspruch 1, **dadurch gekennzeichnet, dass** die Größe der Perforationen (124) ca. 0,1 bis 5 mm beträgt.

11. Luftzufuhrsystem nach Anspruch 1, **dadurch gekennzeichnet, dass** die Perforationen (124) groß ausgelegt und beabstandet sind, um die Intensität von niederfrequenten Vibrationen im vorgelagerten Segment (120) zu reduzieren.

12. Luftzufuhrsystem nach Anspruch 1, **dadurch gekennzeichnet, dass** der Luftmassenmesser (190) in das Strömungsrohr (130) des Luftmassenmessers (190) über eine Öffnung (136) eingeführt wird, die in dem Strömungsrohr (130) des Luftmassenmessers (190) ausgebildet ist.

13. Luftzufuhrsystem nach Anspruch 1, **dadurch gekennzeichnet, dass** die erste Wand (122) einen halbkreisförmigen Ausschnitt (126) beinhaltet, der dem Strömungsrohr (130) des Luftmassenmessers (190) nachgelagert ist.

14. Luftzufuhrsystem nach Anspruch 1, **dadurch gekennzeichnet, dass** der Durchmesser jeder aufeinander folgenden kreisförmigen Öffnung (163a, 165a, 167a, 169a) sich in nachgelagerter Richtung vergrößert.

15. Luftzufuhrsystem nach Anspruch 1, **dadurch gekennzeichnet, dass** sich eine axiale Beabstandung zwischen den aufeinander folgenden Ringen (163, 165, 167, 169) in nachgelagerter Richtung verkleinert.

16. Luftzufuhrsystem nach Anspruch 1, **dadurch gekennzeichnet, dass** das nachgelagerte Segment (140) zwei separate, parallel verlaufende zweite Wände beinhaltet, die jede orthogonal zu der ersten Wand (122) angeordnet sind und mit einer Längsachse des Formteils fluchten.

17. Luftzufuhrsystem nach Anspruch 1, **dadurch gekennzeichnet, dass** die Vielzahl an Ringen (163, 165, 167, 169) groß ausgelegt und beabstandet sind, um die Intensität von hochfrequenten Vibrationen im nachgelagerten Segment (140) zu reduzieren.

18. Verfahren zum Ausgestalten eines Luftzufuhrsystems (100), das dazu ausgelegt ist, in ein Luftansaugsystem eines Verbrennungsmotors eingebaut zu werden, wobei das Verfahren **gekennzeichnet ist durch**:
Ausformung eines im Wesentlichen zylindrischen Formteils (110) mit einem vorgelagerten Segment (120) und einem nachgelagerten Segment (140);
Wickeln einer Lage Drahtgeflecht (180) über eine umlaufende äußere Oberfläche des Formteils (110);
Wickeln einer Schicht Akustikschaum (184) über eine äußere Oberfläche des Drahtgeflechts (180), um ein vormontiertes Bauteil (102) zu bilden;
Einführen des vormontierten Bauteils (102) in ein Gehäuse (200); und
Einführen eines Luftmassenmessers (190) in einen Innenraum des Formteils (110), um die Baugruppe auszubilden, wobei das Formteil (110) beinhaltet:
eine erste Wand (122), die sich entlang einer Längsachse des Formteils (110) erstreckt, wobei die erste Wand (122) eine Vielzahl an Perforationen (124) innerhalb des vorgelagerten Segments (120) beinhaltet;
mindestens eine zweite Wand (142), die innerhalb des nachgelagerten Segments (140) orthogonal zur ersten Wand (122) ausgebildet ist und mit einer Längsachse des Formteils (110) fluchtet;
eine Vielzahl an Ringen (163, 165, 167, 169), die innerhalb des nachgelagerten Segments (140) ausgebildet sind, wobei jeder Ring (163, 165, 167, 169) konzentrisch mit einer Längsachse des Formteils (120) fluchtet und eine zentrale kreisförmige Öffnung (163a, 165a,167a, 169a) hat; und
ein Strömungsrohr (130) des Luftmassenmessers (190), das innerhalb des vorgelagerten Segments (120) angeordnet ist und mit einer Längsachse des Formteils (110) fluchtet, wobei das Strömungsrohr (130) des Luftmassenmessers (190) die erste Wand (122) innerhalb des vorgelagerten Segments (120) gabelförmig teilt.

## Claims

1. An air induction assembly (100) adapted to be incorporated in an air intake system of an internal combustion engine, the air induction assembly (100) being **characterized by** the following features:
a housing (200);
a substantially cylindrical molded part (110) fitted within the housing (200), the molded part (110) having an upstream segment (120) and a downstream segment (140),
a layer of wire mesh (180) formed over a circumferential outer surface of the molded part (110);
a layer of acoustic foam (184) formed over an outer surface of the wire mesh (180); and
a mass air flow sensor (190) inserted into an inner volume of the molded part (110), the molded part (110) comprising:
a first wall (122) extending along a longitudinal axis of the molded part (110), the first wall (122) comprising a plurality of perforations (124) within the upstream segment (120);
at least a second wall (142) disposed within the downstream segment (140) orthogonally to the first wall (122) and aligned with a longitudinal axis of the molded part (110);
a plurality of rings (163, 165, 167, 169) disposed within the downstream segment (140), each ring (163, 165, 167, 169) aligned with respect to a longitudinal axis of the molded part (110) and having a central circular opening (163a, 165a, 167a, 169a); and
a flow tube (130) of the mass air flow sensor (190) disposed within the upstream segment (120) and aligned with a longitudinal axis of the molded part (110), the flow tube (130) of the mass air flow sensor (190) bifurcating the first wall (122) within the upstream segment (129).

2. Air induction assembly according to claim 1, **characterized in that** the first wall (122), the second wall (142), the flow tube (130) of the mass air flow sensor (190), and the plurality of rings (163, 165, 167, 169) have a thickness of about 1.5 to 3 mm.

3. Air induction assembly according to claim 1, **characterized in that** the wire mesh (180) has a thickness of less than about 0.3 mm.

4. Air induction assembly according to claim 1, **characterized in that** the acoustic foam (184) comprises ethylene propylene diene monomer.

5. Air induction assembly according to claim 1, **characterized in that** the acoustic foam (184) has a thickness of about 5 to 20 mm.

6. Air induction assembly according to claim 1, **characterized in that** the molded part (110) comprises a pair of fasteners (198) for attaching parts.

7. Air induction assembly according to claim 1, **characterized in that** the housing (200) comprises an outlet duct of a filter insert.

8. Air induction assembly according to claim 7, **characterized in that** the housing (200) comprises a circumferentially raised bead at a downstream end thereof.

9. Air induction assembly according to claim 7, **characterized in that** the housing (200) comprises circumferentially raised beads at a downstream end and at an upstream end thereof.

10. Air induction assembly according to claim 1, **characterized in that** the size of the perforations (124) is from about 0.1 to 5 mm.

11. Air induction assembly according to claim 1, **characterized in that** the perforations (124) are sized and spaced to reduce the intensity of low frequency vibrations in the upstream segment (120).

12. Air induction assembly according to claim 1, **characterized in that** the mass air flow sensor (190) is inserted into the flow tube (130) of the mass air flow sensor (190) via an aperture (136) formed in the flow tube (130) of the mass air flow sensor (190).

13. Air induction assembly according to claim 1, **characterized in that** the first wall (122) comprises a semicircular cut away section (126) downstream of the flow tube (130) of the mass air flow sensor (190).

14. Air induction assembly according to claim 1, **characterized in that** the diameter of each successive circular opening (163a, 165a, 167a, 169a) increases in downstream direction.

15. Air induction assembly according to claim 1, **characterized in that** an axial spacing between each successive ring (163, 165, 167, 169) decreases in downstream direction.

16. Air induction assembly according to claim 1, **characterized in that** the downstream segment (140) comprises two separate parallel second walls that are each formed orthogonally to the first wall (122) and which are aligned with a longitudinal axis of the molded part.

17. Air induction assembly according to claim 1, **characterized in that** the plurality of rings (163, 165, 167, 169) are sized and spaced to reduce the intensity of high frequency vibrations in the downstream segment (140).

18. A method of forming an air induction assembly (100) adapted to be incorporated in an air intake system of an internal combustion engine, the method being **characterized by**:
forming a substantially cylindrical molded part (110) having an upstream segment (120) and a downstream segment (140);
wrapping a layer of wire mesh (180) over a circumferential outer surface of the molded part (110);
wrapping a layer of acoustic foam (184) over an outer surface of the wire mesh (180) to form a pre-assembly (102);
inserting the pre-assembly (102) into a housing (200); and
inserting a mass air flow sensor (190) into an inner volume of the molded part (110) to form the assembly, the molded part comprising:
a first wall (122) extending along a longitudinal axis of the molded part (110), the first wall (122) comprising a plurality of perforations (124) within the upstream segment (120);
at least a second wall (142) formed within the downstream segment (140) orthogonally to the first wall (122) and aligned with a longitudinal axis of the molded part (110);
a plurality of rings (163, 165, 167, 169) formed within the downstream segment (140), each ring (163, 165, 167, 169) being concentrically aligned with respect to a longitudinal axis of the molded part (120) and having a central circular opening (163a, 165a, 167a, 169a); and
a flow tube (130) of the mass air flow sensor (190) disposed within the upstream segment (120) and aligned with a longitudinal axis of the molded part (110), the flow tube (130) of the mass air flow sensor (190) bifurcating the first wall (122) within the upstream segment (129).

## Revendications

1. Système d'alimentation en air (100), convenant pour être monté dans un système d'aspiration d'air d'un moteur à combustion, le système d'alimentation en air (100) étant **caractérisé par** les caractéristiques suivantes :
un boîtier (200) ;
une pièce moulée (110) essentiellement cylindrique insérée dans le boîtier (200), la pièce moulée (110) possédant un segment monté en amont (120) et un segment monté en aval (140) ;
une couche de treillis métallique (180) qui est formée sur une surface extérieure périphérique de la pièce moulée (110) ;
une couche de mousse acoustique (184) qui est formée sur une surface extérieure du treillis métallique (180) ; et
un mesureur de masse d'air (190) qui est introduit dans un espace intérieur de la pièce moulée (110), la pièce moulée (110) comprenant :
une première paroi (122) qui s'étend le long d'un axe longitudinal de la pièce moulée (110), la première paroi (122) comprenant une pluralité de perforations (124) à l'intérieur du segment monté en amont (120) ;
au moins une deuxième paroi (142) qui est placée à l'intérieur du segment monté en aval (140) orthogonalement à la première paroi (122) et est alignée sur un axe longitudinal de la pièce moulée (110) ;
une pluralité d'anneaux (163, 165, 167, 169) qui sont placés à l'intérieur du segment monté en aval (140), chaque anneau (163, 165, 167, 169) étant aligné sur un axe longitudinal de la pièce moulée (110) et possédant une ouverture circulaire centrale (163a, 165a, 167a, 169a) ; et
un tube d'écoulement (130) du mesureur de masse d'air (190) qui est placé à l'intérieur du segment monté en amont (120) et est aligné sur un axe longitudinal de la pièce moulée (110), le tube d'écoulement (130) du mesureur de masse d'air (190) divisant la première paroi (122) en forme de fourche à l'intérieur du segment monté en amont (120).

2. Système d'alimentation en air selon la revendication 1, **caractérisé en ce que** la première paroi (122), la deuxième paroi (142), le tube d'écoulement (130) du mesureur de masse d'air (190) et la pluralité d'anneaux (163, 165, 167, 169) présentent une épaisseur d'environ 1,5 à 3 mm.

3. Système d'alimentation en air selon la revendication 1, **caractérisé en ce que** le treillis métallique (180) présente une épaisseur inférieure à environ 0,3 mm.

4. Système d'alimentation en air selon la revendication 1, **caractérisé en ce que** la mousse acoustique (184) contient un élastomère éthylène-propylène.

5. Système d'alimentation en air selon la revendication 1, **caractérisé en ce que** la mousse acoustique (184) présente une épaisseur d'environ 5 à 20 mm.

6. Système d'alimentation en air selon la revendication 1, **caractérisé en ce que** la pièce moulée (110) comprend une paire de moyens de jonction (198) pour fixer des pièces.

7. Système d'alimentation en air selon la revendication 1, **caractérisé en ce que** le boîtier (200) comprend un canal de sortie d'un insert de filtre.

8. Système d'alimentation en air selon la revendication 7, **caractérisé en ce que** le boîtier (200) comprend à son extrémité montée en aval un bourrelet périphérique surélevé.

9. Système d'alimentation en air selon la revendication 7, **caractérisé en ce que** le boîtier (200) comprend à son extrémité montée en aval et à son extrémité montée en amont des bourrelets périphériques surélevés.

10. Système d'alimentation en air selon la revendication 1, **caractérisé en ce que** la taille des perforations (124) est d'environ 0,1 à 5 mm.

11. Système d'alimentation en air selon la revendication 1, **caractérisé en ce que** les perforations (124) sont réalisées grandes et espacées, afin de réduire l'intensité de vibrations à basse fréquence dans le segment monté en amont (120).

12. Système d'alimentation en air selon la revendication 1, **caractérisé en ce que** le mesureur de masse d'air (190) est introduit dans le tube d'écoulement (130) du mesureur de masse d'air (190) par l'intermédiaire d'une ouverture (136) qui est réalisée dans le tube d'écoulement (130) du mesureur de masse d'air (190).

13. Système d'alimentation en air selon la revendication 1, **caractérisé en ce que** la première paroi (122) comprend une découpe semi-circulaire (126) qui est reculée par rapport au tube d'écoulement (130) du mesureur de masse d'air (190).

14. Système d'alimentation en air selon la revendication 1, **caractérisé en ce que** le diamètre de chaque ouverture circulaire successive (163a, 165a, 167a, 169a) augmente dans la direction de recul.

15. Système d'alimentation en air selon la revendication 1, **caractérisé en ce qu'**une distance axiale entre les anneaux successifs (163, 165, 167, 169) diminue dans la direction de recul.

16. Système d'alimentation en air selon la revendication 1, **caractérisé en ce que** le segment monté en aval (140) comprend deux deuxièmes parois parallèles séparées qui sont placées chacune orthogonalement à la première paroi (122) et sont alignées sur un axe longitudinal de la pièce moulée.

17. Système d'alimentation en air selon la revendication 1, **caractérisé en ce que** la pluralité des anneaux (163, 165, 167, 169) sont réalisés grands et espacés les uns des autres, afin de réduire l'intensité de vibrations à haute fréquence dans le segment monté en aval (140).

18. Procédé de conformation d'un système d'alimentation en air, qui est conçu pour être monté dans un système d'aspiration d'air d'un moteur à combustion, le procédé étant **caractérisé par** :
le formage d'une pièce moulée (110) essentiellement cylindrique avec un segment monté en amont (120) et un segment monté en aval (140) ;
l'enroulement d'une couche de treillis métallique (180) sur une surface périphérique extérieure de la pièce moulée (110) ;
l'enroulement d'une couche de mousse acoustique (184) sur une surface extérieure du treillis métallique (180), afin de former un composant pré-assemblé (102) ;
l'introduction du composant pré-assemblé (102) dans un boîtier (200) ; et l'introduction d'un mesureur de masse d'air (190) dans un espace intérieur de la pièce moulée (110), afin de former le composant, la pièce moulée (110) comprenant :
une première paroi (122) qui s'étend le long d'un axe longitudinal de la pièce moulée (110), la première paroi (122) comprenant une pluralité de perforations (124) à l'intérieur du segment monté en amont (120) ;
au moins une deuxième paroi (142) qui est formée à l'intérieur du segment monté en aval (140) orthogonalement à la première paroi (122) et est alignée sur un axe longitudinal de la pièce moulée (110) ;
une pluralité d'anneaux (163, 165, 167, 169) qui sont formés à l'intérieur du segment monté en aval (140), chaque anneau (163, 165, 167, 169) étant aligné de manière concentrique sur un axe longitudinal de la pièce moulée (120) et possédant une ouverture circulaire centrale (163a, 165a, 167a, 169a) ; et
un tube d'écoulement (130) du mesureur de masse d'air (190) qui est placé à l'intérieur du segment avancé (120) et est aligné sur un axe longitudinal de la pièce moulée (110), le tube d'écoulement (130) du mesureur de masse d'air (190) divisant la première paroi (122) en forme de fourche à l'intérieur du segment monté en amont (120).
